# EUROPEAN PATENT APPLICATION

(11) **EP 4 481 997 A1**
(43) Date of publication of application: **25.12.2024**
(21) Application number: 23756104.8
(22) Date of filing: 24.01.2023
(51) Int. Cl.: H02K 5/00, H02K 19/14

(54) **ROTATING ELECTRICAL MACHINE**

(30) Priority: 15.02.2022 JP 2022021452
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: FUJITA, Masafumi, Kawasaki-shi, Kanagawa 212-0013 (JP); TAKAHASHI, Norio, Kawasaki-shi, Kanagawa 212-0013 (JP); HIROSE, Takaaki, Kawasaki-shi, Kanagawa 212-0013 (JP); UEDA, Takashi, Kawasaki-shi, Kanagawa 212-0013 (JP); TAKAHASHI, Tomoyuki, Kawasaki-shi, Kanagawa 212-0013 (JP)
(74) Representative: Hoffmann Eitle
(86) International application number: PCT/JP2023/002065
(87) International publication number: WO 2023/157576

(57) **Abstract**

According to one embodiment, there is provided a rotating electrical machine including a rotor (1) having a field unit (3) configured to generate a magnetic field; and a stator (5) provided on a radially outer side of the rotor (1) and including a stator coil (6) configured to generate the magnetic field interacting with a magnetic field generated by the field unit (3), the stator (5) including magnetic shields (8) provided on a radially outer side of the stator coil (6) and composed of a plurality of cylindrical magnetic bodies disposed so as to be spaced apart from one another in a radial direction.

## Description

### FIELD

Embodiments described herein relate generally to a rotating electrical machine.

### BACKGROUND

In various industrial fields, a rotating electrical machine is required to be reduced in size and weight. Accordingly, it is required to increase the output density by further strengthening the magnetic field. In strengthening the magnetic field, it is required that a structure such as a frame arranged on an outer peripheral portion for supporting and fixing the rotating electrical machine, or a magnetic core or a magnetic shield for preventing leakage of the magnetic field to an outside of the machine be disposed around the rotating electrical machine.

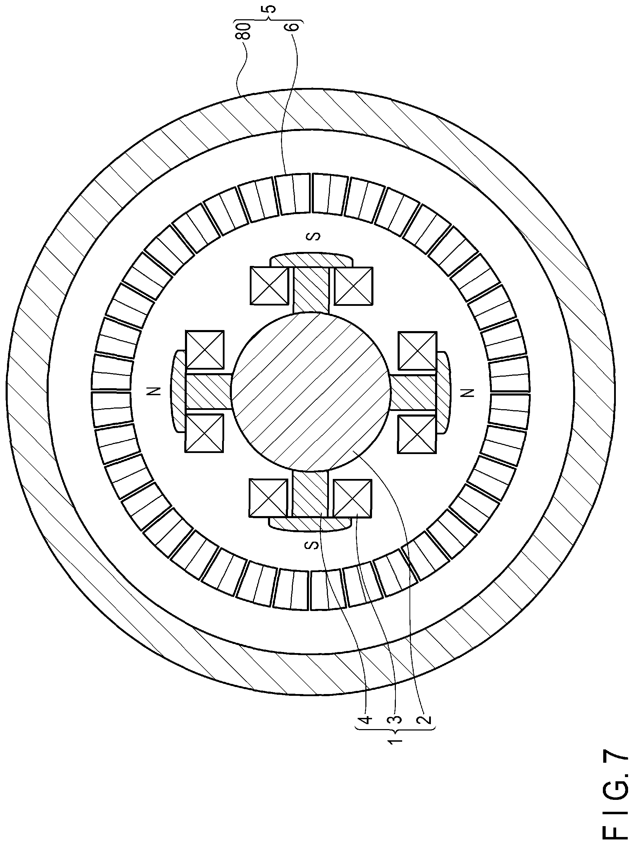

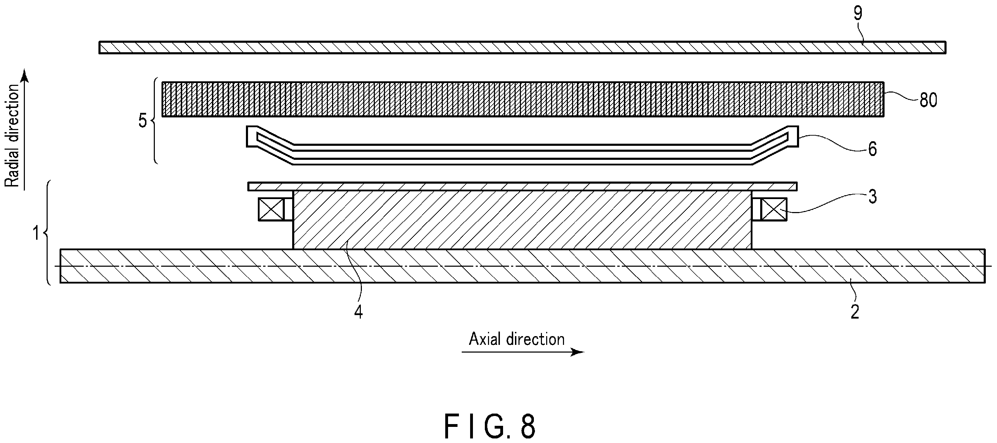

FIG. 7 is a diagram illustrating an example of a sectional shape (a shape of a section perpendicular to a rotary shaft) of a portion of a conventional rotating electrical machine. FIG. 8 is a diagram illustrating an example of a sectional shape (a shape of a section parallel to the rotary shaft) of a portion of the same rotating electrical machine.

As shown in FIGS. 7 and 8, the rotating electrical machine includes a rotor 1, a stator 5 provided on a radially outer side of the rotor 1 so as to be spaced apart from the rotor 1, and a frame 9 provided on a radially outer side of the stator 5 so as to be spaced apart from the stator 5. The rotor 1 includes a rotary shaft 2, a rotor coil (field unit) 3, and a rotor coil support member 4. The stator 5 includes a stator coil 6 and a magnetic shield 80.

A magnetic field caused by the rotor coil 3 and the stator coil 6 is directed toward the magnetic shield 80 located on a radially outer side of the stator coil 6, but the magnetic field leaking to an outside of the magnetic shield 80 is reduced by the shielding effect of the magnetic shield 80.

For example, when the frame 9 supporting the rotating electrical machine is formed of a conductor, an eddy current flows in the frame 9 due to the magnetic field leaking from the magnetic shield 80, and overheating occurs. Further, regardless of the presence or absence of the frame 9, when the magnetic field leaks to a radially outer side of the rotating electrical machine, there is a possibility that an influence such as an operation abnormality is exerted on a peripheral device or the like.

A shield structure constituting the magnetic shield is often formed of an iron material having a specific gravity of more than 7, such as an electromagnetic steel sheet, which tends to increase the size and weight of the rotating electrical machine. In order to reduce the size and weight of the rotating electrical machine, it is desired to reduce the volume or weight of the shield structure.

### SUMMARY

According to one embodiment, there is provided a rotating electrical machine including a rotor having a field unit configured to generate a magnetic field; and a stator provided on a radially outer side of the rotor and including a stator coil configured to generate the magnetic field interacting with a magnetic field generated by the field unit, the stator including magnetic shields provided on a radially outer side of the stator coil and composed of a plurality of cylindrical magnetic bodies disposed so as to be spaced apart from one another in a radial direction.

According to the present invention, the volume or weight of the shield structure can be reduced.

### BRIEF DESCRIPTION OF THE DRAWING(S)

FIG. 1 is a diagram illustrating an example of a cross-sectional shape (a shape of a cross section perpendicular to a rotary shaft) of a portion of a rotating electrical machine according to an embodiment.
FIG. 2 is a diagram illustrating an example of a cross-sectional shape (a shape of a cross section parallel to the rotary shaft) of a portion of the rotating electrical machine according to the embodiment.
FIG. 3 is a graph illustrating results of numerical analyses of magnetic flux density distributions along a circumferential direction of a leakage magnetic field leaking to a radially outer side of a shield structure regarding the embodiment and a conventional example, respectively.
FIG. 4 is a conceptual diagram illustrating a magnetic flux density distribution along an axial direction of the leakage magnetic field leaking to the radially outer side of a double cylinder according to the embodiment, superimposed on a magnetic flux density distribution along an axial direction of the leakage magnetic field leaking to the radially outer side of a conventional single cylinder.
FIG. 5 is a diagram illustrating an example of a cross-sectional shape (a shape of a cross section perpendicular to the rotary shaft) of a shield structure in which magnetic shield support members 11 are provided between magnetic shields 8a and 8b.
FIG. 6 is a diagram illustrating joining of a plurality of fan-shaped units 8a-1, 8a-2, 8a-3, and the like, constituting the magnetic shield 8a.
FIG. 7 is a diagram illustrating an example of a sectional shape (a shape of a section perpendicular to a rotary shaft) of a portion of a conventional rotating electrical machine.
FIG. 8 is a diagram illustrating an example of a sectional shape (a shape of a section parallel to a rotary shaft) of a portion of the conventional rotating electrical machine.

### DETAILED DESCRIPTION

Hereinafter, an embodiment will be described with reference to the drawings.

### (Overall Configuration)

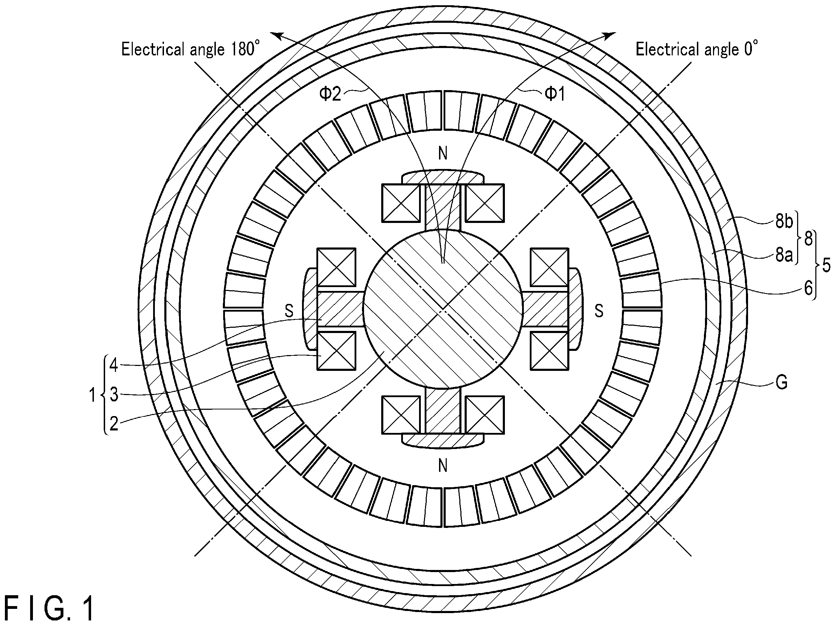

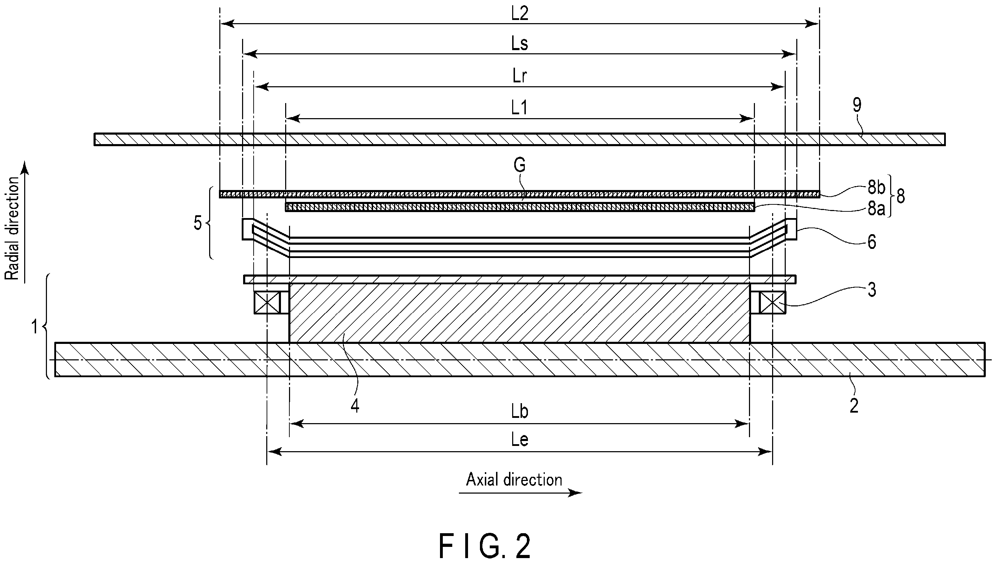

FIG. 1 is a diagram illustrating an example of a cross-sectional shape (a shape of a cross section perpendicular to a rotary shaft) of a portion of a rotating electrical machine according to an embodiment. FIG. 2 is a diagram illustrating an example of a sectional shape (a shape of a cross section parallel to the rotary shaft) of a portion of the rotating electrical machine.

As shown in FIGS. 1 and 2, the rotating electrical machine includes a rotor 1, a stator 5 provided on a radially outer side of the rotor 1 so as to be spaced apart from the rotor 1, and a frame 9 provided on a radially outer side of the stator 5 so as to be spaced apart from the stator 5.

### (Configuration of Rotor 1)

The rotor 1 includes a rotary shaft 2, a rotor coil (field unit) 3, and a rotor coil support member 4.

In the present embodiment, a case where the rotor coil is employed as field means (field unit) on the rotor side is exemplified, but a permanent magnet may be employed instead of the rotor coil.

The rotary shaft 2 is a shaft that rotates as a central axis of the rotor 1.

The rotor coil 3 is supported by a rotor coil support member 4 so as to be rotatable together with the rotary shaft 2. The rotor coil 3 is wound around the rotor coil support member 4 in a shape close to a rectangular shape, and functions as a field unit that generates a magnetic field.

The rotor coil support member 4 is fixed to the rotary shaft 2 and stably supports the rotor coil 3 so as to counteract a centrifugal force caused by the rotation of the rotor 1. The rotor coil support member 4 is made of, for example, a magnetic body. In this case, the rotor coil support member 4 functions as a rotor magnetic pole. The rotor coil support member 4 may be made of a non-magnetic material (non-magnetic body). In this case, the rotor coil 3 functions as an air-core coil.

In the example of FIG. 1, the rotor coil support member 4 is constituted by four members, and four magnetic poles (two N poles and two S poles) are formed. However, the number of members constituting the rotor coil support member 4 is not limited to four (the number of the magnetic poles may be a number other than four).

### (Configuration of Stator 5)

The stator 5 includes a stator coil 6 and a plurality of magnetic shields 8.

The stator coil 6 generates a magnetic field that interacts with a magnetic field generated by the rotor coil (field unit) 3.

The plurality of magnetic shields 8 are provided on the radially outer side of the stator coil 6, and are formed of a plurality of cylindrical magnetic bodies arranged so as to be separated from each other by a predetermined distance in the radial direction. Each of the plurality of magnetic shields 8 is formed of a plurality of annular electromagnetic steel sheets stacked in an axial direction of the rotating electrical machine.

The plurality of magnetic shields 8 include a magnetic shield (first magnetic shield) 8a disposed on a radially inner side and a magnetic shield (second magnetic shield) 8b disposed on a radially outer side of the magnetic shield 8a. That is, the two magnetic shields 8a and 8b form a double-cylindrical shield structure. Although not shown in FIG. 2, another magnetic shield (for example, a disc-shaped magnetic shield) for preventing leakage of a magnetic field to the outside in the axial direction of the machine may be further provided at both end portions of the magnetic shield 8b so as to surround the rotor coil 3 and the stator coil 6 from both sides in the axial direction.

A gap G is provided between the magnetic shield 8a and the magnetic shield 8b. In addition to the gap G, a non-magnetic body may be further provided. A refrigerant such as a cooling gas flows through the gap G, to reduce the heat generated in the magnetic shields 8a and 8b. In a case where the non-magnetic body is provided, the non-magnetic body is disposed so as to maintain a uniform interval between the magnetic shield 8a and the magnetic shield 8b, and functions as a support member that supports and fixes the magnetic shields 8a and 8b. Details of the non-magnetic body will be described later.

In the example of FIGS. 1 and 2, a case where the two magnetic shields are disposed is illustrated; however, the embodiment is not limited to this case, and three or more magnetic shields may be disposed to be separated from each other in the radial direction. That is, the shield structure is not limited to the double cylinder, and a multiple cylinder shield including three or more magnetic shields may be formed.

### (Length of Each Portion in Axial Direction)

In FIG. 2, L1 indicates a length of the magnetic shield 8a in the axial direction. L2 indicates a length of the magnetic shield 8b in the axial direction. Lr indicates a length of the rotor coil 3 in the axial direction. Ls indicates a length of the stator coil 6 in the axial direction. Lb indicates a length of a linear portion extending linearly in the axial direction of each of the rotor coil 3 and the stator coil 6. Le indicates a length of a line in the axial direction connecting axial center positions of two coil end portions extending from both sides of a coil portion of a linear portion extending linearly in the axial direction of the stator coil 6, or a length of a line in the axial direction connecting axial center positions of two coil portions extending in a rotational direction of the rotor coil 3.

### (Configurations of Rotor Coil 3 and Stator Coil 6)

The rotor coil 3 and the stator coil 6 each have a linear portion extending linearly in the axial direction of the rotary shaft 2. The length of the linear portion is assumed to be Lb. In the example of FIG. 2, the length of the linear portion of the rotor coil 3 and the length of the linear portion of the stator coil 6 are equal to each other, but the embodiment is not limited to this example, and the lengths of the linear portions may be different from each other.

The rotor coil 3 and the stator coil 6 each have the linear portion and end portions which are located on both outer sides in the axial direction and are connected to other linear portions. The end portions correspond to portions called coil end portions in the stator coil 6, and extend from the coil portion of the linear portion extending in the axial direction to both sides in the axial direction. In addition, the end portions correspond to coil portions that continuously connect a coil portion of a linear portion extending in the axial direction and a coil portion extending in the rotational direction in the rotor coil 3, and are located at positions protruding from the rotor coil support member 4 on both sides in the axial direction.

### (Actions of Rotor Coil 3 and Stator Coil 6)

The magnetic field generated by the rotating rotor coil 3 generates electric power in the stator coil 6 on the stator 5 side by electromagnetic induction in a case where the rotating electrical machine operates as a generator, and generates torque by interaction with the magnetic field generated by the current flowing in the stator coil 6 on the stator 5 side, thereby rotating the rotor 1, in a case where the rotating electrical machine operates as a motor. At this time, the magnetic field caused by the rotor coil 3 and the stator coil 6 is directed toward the plurality of magnetic shields 8 located on the radially outer side of the stator coil 6, but the magnetic field (leakage magnetic field) leaking to the outside of the plurality of magnetic shields 8 is reduced by the shielding effect of the plurality of magnetic shields 8.

### (Magnetic Flux Density Distribution along Circumferential Direction)

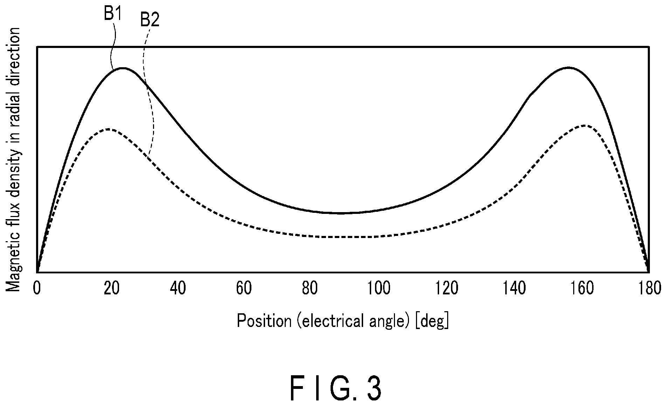

FIG. 3 is a graph illustrating results of numerical analyses of magnetic flux density distributions along the circumferential direction of a leakage magnetic field leaking to a radially outer side of a shield structure regarding the embodiment and a conventional example, respectively.

The horizontal axis of the graph indicates a circumferential position of the magnetic shield around the rotary shaft 2 (the electrical angle of the rotating electrical machine, that is, the electrical angle when one pole of the rotating electrical machine corresponds to 0 to 180 degrees), and the vertical axis indicates a magnetic flux density in the radial direction in the space on the radially outer side of the shield structure. It is assumed that the space at the position where the magnetic flux density is examined is a nonmagnetic space, and the ratio of the magnetic flux density is the same as the ratio of the magnetic field.

In the conventional example, the shield structure is formed in a single cylinder like the magnetic shield 80 shown in FIGS. 7 and 8, whereas in the present embodiment, the shield structure is formed in a double cylinder like the magnetic shields 8a and 8b shown in FIGS. 1 and 2.

In FIG. 3, a symbol B1 indicates characteristics of the magnetic flux density distribution of the single cylinder according to the conventional example, and a symbol B2 indicates characteristics of the magnetic flux density distribution of the double cylinder according to the present embodiment. Here, the sectional area of the conventional magnetic shield 80 shown in FIG. 7 is made equal to the sum of sectional areas of the magnetic shields 8a and 8b of the present embodiment shown in FIG. 1, whereby the weight per unit length of the single cylinder is made equal to that of the double cylinder. The thicknesses of the magnetic shields 8a and 8b of the double cylinder in the radial direction are the same.

From the graph of FIG. 3, it is understood that the magnetic flux density of the leakage magnetic field leaking to the radially outer side of the shield structure is smaller and a higher shield effect can be obtained in the characteristics B2 of the double cylinder according to the present embodiment than in the characteristic B1 of the single cylinder according to the conventional example. In particular, it is understood that the peaks of the magnetic flux density observed at the electrical angles of about 20 degrees and about 160 degrees are significantly reduced, and a higher shielding effect can be obtained. The magnetic fluxes at the respective peaks are denoted by ϕ1 and ϕ2, and the lines of magnetic fluxes are shown in FIG. 1.

One of the reasons why the magnetic shields 8a and 8b of the present embodiment can provide the effect of reducing the leakage magnetic field is that the magnetic fluxes directed from the magnetic poles toward the radially outer side enter and exit the gap G from the magnetic shields 8a, and the directions of the magnetic fluxes are changed when entering and exiting the magnetic shields 8b from the gap G. For example, the magnetic fluxes ϕ1 and ϕ2 are directed from the magnetic poles toward the radially outer side while drawing arcs as shown in FIG. 1, so as to pass through the magnetic shield 8a, the gap G, and the magnetic shield 8b in this order. However, since the physical characteristics such as magnetic permeability are different between the magnetic shield 8a and the gap G and between the gap G and the magnetic shield 8b, the directions of parts of the magnetic fluxes ϕ1 and ϕ2 are changed to be directed in the circumferential direction rather than the radially outer direction, and the parts of the magnetic fluxes ϕ1 and ϕ2 travel in the circumferential direction. As a result, the density of the magnetic flux of the magnetic field leaking to the radially outer side of the magnetic shield 8b is smaller than that of the conventional example.

As described above, in a case where the weight per unit length of the double cylinder is set to be the same as the weight per unit length of the single cylinder, the leakage magnetic field becomes smaller than that of the single cylinder, and therefore, if the cross-sectional dimension of the double cylinder, that is, the weight per unit length, is determined so that the leakage magnetic field becomes the same level as that of the single cylinder, the weight of the magnetic body constituting the shield structure can be reduced.

### (Magnetic Flux Density Distribution along Axial Direction)

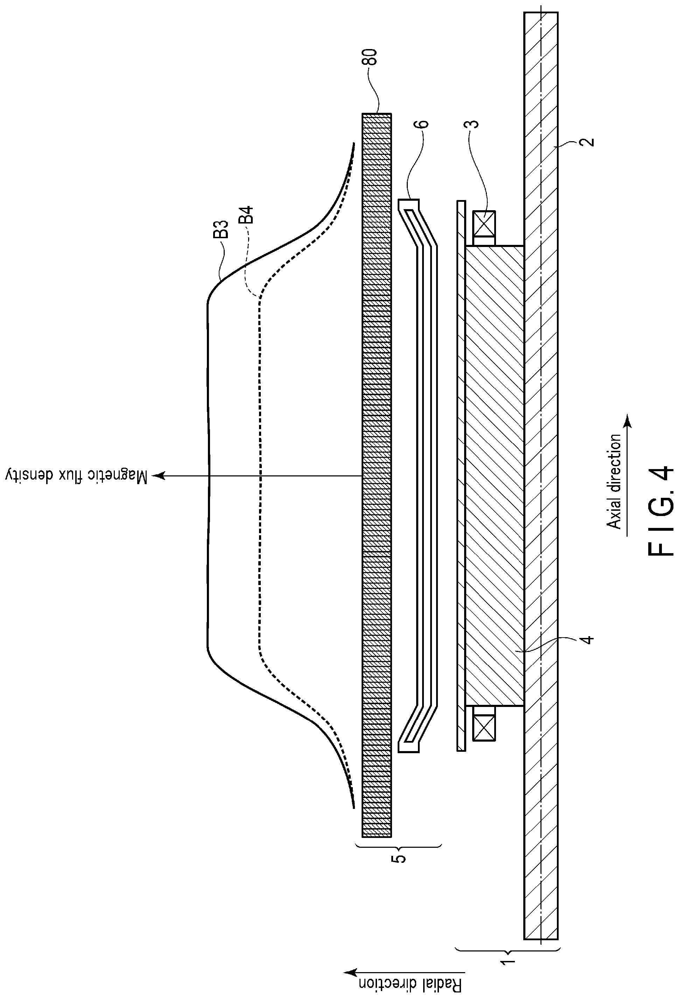

FIG. 4 is a conceptual diagram illustrating a magnetic flux density distribution along the axial direction of the leakage magnetic field leaking to the radially outer side of a double cylinder according to the embodiment, superimposed on a magnetic flux density distribution along the axial direction of the leakage magnetic field leaking to the radially outer side of a conventional single cylinder.

In FIG. 4, a symbol B3 indicates characteristics of the magnetic flux density distribution of the single cylinder according to the conventional example, and a symbol B4 indicates characteristics of the magnetic flux density distribution of the double cylinder according to the present embodiment. Here, the sectional area of the conventional magnetic shield 80 shown in FIG. 7 is also made equal to the sum of sectional areas of the magnetic shields 8a and 8b of the embodiment shown in FIG. 1, whereby the weight per unit length of the single cylinder is made equal to that of the double cylinder. The thicknesses of the two magnetic shields of the double cylinder in the radial direction are the same.

In the conventional single cylinder, as represented by the characteristics B3 in FIG. 4, the magnetic flux density of the leakage magnetic field is high at a central portion in the axial direction of the stator 5 and low at both ends of the stator 5. Therefore, it is desirable to enhance the shielding effect particularly in the range corresponding to the central portion in the axial direction of the stator 5 rather than the end portions in the axial direction of the stator 5. In this respect, the double cylinder according to the present embodiment is configured such that two layers of magnetic shields are present in a range corresponding to the central portion in the axial direction of the stator 5 and one layer of magnetic shield is present in ranges corresponding to both end portions in the axial direction of the stator 5 as shown in FIG. 2, and therefore, a high shielding effect can be obtained while achieving a reduction in size and weight of the shield structure.

As can be understood from FIG. 4, the magnetic flux density of the leakage magnetic field leaking to the radially outer side of the shield structure is smaller in the characteristics B4 of the double cylinder according to the present embodiment than in the characteristics B3 of the single cylinder according to the conventional example, and it is understood that a high shielding effect can be obtained.

That is, from FIG. 4, it is also understood that in a case where the weight per unit length of the double cylinder is equal to the weight per unit length of the single cylinder, the leakage magnetic field becomes smaller than that of the single cylinder; therefore, in a case where the sectional dimension of the double cylinder, namely, the weight per unit length, is determined so that the leakage magnetic field becomes the same level as that of the single cylinder, the weight of the magnetic body constituting the shield structure can be reduced.

### (Supporting Fixation between Magnetic Shields 8a and 8b)

The magnetic shields 8a and 8b may be supported and fixed by a support member or the like so as to maintain a uniform interval.

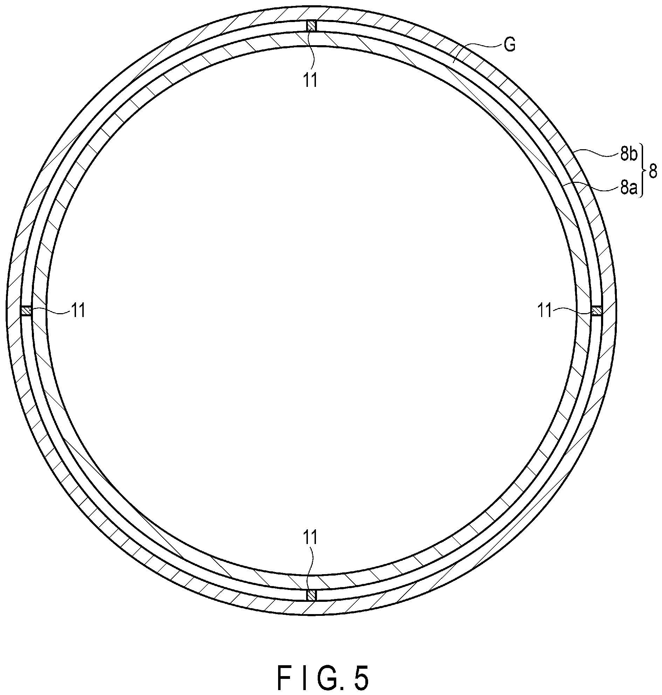

FIG. 5 is a diagram illustrating an example of a cross-sectional shape (a shape of a cross section perpendicular to the rotary shaft) of a shield structure in which magnetic shield support members 11 are provided between magnetic shields 8a and 8b.

In the example of FIG. 5, a plurality of magnetic shield support members 11 as non-magnetic bodies are disposed between the magnetic shields 8a and 8b at equal intervals in the circumferential direction. A refrigerant such as a cooling gas flows through the plurality of gaps G formed by the arrangement of the plurality of magnetic shield support members 11, to reduce the heat generated in the magnetic shields 8a and 8b.

In order to obtain the shielding effect by the double cylinder, it is necessary to provide a non-magnetic region between the two cylinders. Therefore, in the example of FIG. 5, a structure is adopted in which a non-magnetic body is disposed as the magnetic shield support members 11 between the magnetic shields 8a and 8b. The magnetic shield support members 11 are arranged so as to secure contact areas between the magnetic shields 8a and 8b, whereby heat conduction is satisfactorily performed between the two magnetic shields, to reduce heat generated in the magnetic shields 8a and 8b.

### (Lengths of Magnetic Shields 8a and 8b in Axial Direction)

As shown in FIG. 2, the length L1 in the axial direction of the magnetic shield 8a, which is disposed radially inward of the plurality of magnetic shields 8, is set to be shorter than the length L2 in the axial direction of the magnetic shield 8b disposed radially outward from the magnetic shield 8a. In this case, the length L1 in the axial direction of the magnetic shield 8a is set to be equal to or longer than the lengths Lb in the axial direction of the linear portions of the rotor coil 3 and the stator coil 6 extending linearly in the axial direction.

That is, the magnetic shield 8a is disposed in a range where the magnetic field generated by the stator coil 6 and the rotor coil 3 is strong (a range of lengths substantially equal to the lengths of the linear portions of the coils). In this range, both the magnetic shield 8a and the magnetic shield 8b contribute to shielding of the magnetic field, and in a range where only the magnetic shield 8b is singly provided (a range corresponding to the coil end portion), the magnetic shield 8b contributes to shielding of a weaker magnetic field.

### (Details of Lengths of Magnetic Shields 8a and 8b in Axial Direction)

The lengths of the magnetic shields 8a and 8b in the axial direction are preferably set as follows, although the optimum lengths of the magnetic shields 8a and 8b in the axial direction vary depending on the geometric shapes of the stator coil 6 and the rotor coil 3, such as the lengths thereof, the circumferential range thereof, and the inclination thereof with respect to the axial direction at the end portions thereof.

That is, the length L1 of the magnetic shield 8a in the axial direction is preferably shorter than the length Le of a line in the axial direction connecting axial center positions of two coil end portions extending from both sides of a coil portion of a linear portion extending linearly in the axial direction of the stator coil 6, or shorter than the length Le of a line in the axial direction connecting axial center positions of two coil portions extending in a rotational direction of the rotor coil 3. This configuration does not hinder the work around the coil end portions, and can shield the magnetic field generated by each coil.

The length L2 of the magnetic shield 8b in the axial direction is preferably longer than the length Ls of the stator coil 6 in the axial direction or the length Lr of the rotor coil 3 in the axial direction. With this configuration, the magnetic field generated at the end of each coil can also be shielded, and the leakage magnetic field can be effectively reduced.

In a case where three or more magnetic shields 8 are provided, an additional magnetic shield may be provided in the space between the magnetic shield 8a and the magnetic shield 8b. In this case, the length of the additional shield in the axial direction is longer than the length L1 of the magnetic shield 8a in the axial direction on the radially inner side and shorter than the length L2 of the magnetic shield 8b in the axial direction on the radially outer side. That is, in the case where three or more magnetic shields 8 are provided, the magnetic shields are configured so that the length of each magnetic shield in the axial direction is shorter toward the radially inner side and longer toward the radially outer side.

With this configuration, the magnetic shield is configured to have a larger number of layers toward the center portion of the stator 5 in the axial direction and a smaller number of layers toward both end portions of the stator 5 in the axial direction, and thus, a high shielding effect can be obtained while achieving a reduction in size and weight of the shield structure.

### (Magnetic Resistance of Magnetic Shields 8a and 8b in Circumferential Direction)

The magnetic resistance in the circumferential direction of the magnetic shield 8a disposed on the radially inner side among the plurality of magnetic shields 8 shown in FIGS. 1 and 2 may be set to be smaller than the magnetic resistance in the circumferential direction of the magnetic shield 8b disposed on the radially outer side of the magnetic shield 8a. The magnetic resistance is expressed by "length of magnetic path / (magnetic permeability × cross-sectional area)".

In order to reduce the magnetic resistance in the circumferential direction of the magnetic shield 8a on the radially inner side, for example, the magnetic permeability in the circumferential direction of the material of the magnetic shield 8a on the radially inner side may be set to be higher than the magnetic permeability in the circumferential direction of the material of the magnetic shield 8b on the radially outer side. In this case, a grain-oriented electromagnetic steel sheet may be used for the magnetic shield 8a on the radially inner side, and a non-grain-oriented electromagnetic steel sheet may be used for the magnetic shield 8b on the radially outer side.

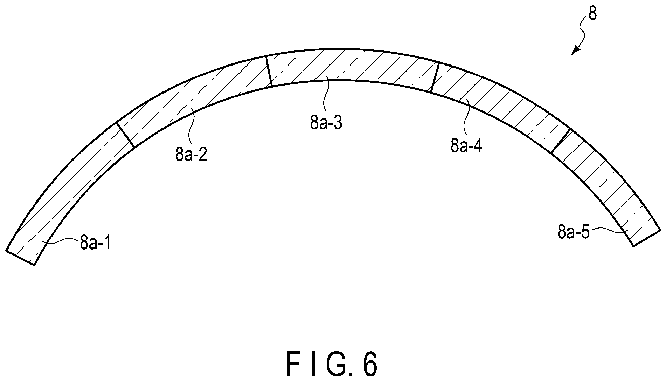

In the magnetic shield 8a using the grain-oriented electromagnetic steel sheet, the grain-oriented electromagnetic steel sheet is disposed such that the easy magnetization direction (direction in which magnetic moments are easily oriented) of the grain-oriented electromagnetic steel sheet is substantially oriented in the circumferential direction. In order to realize this, for example, as shown in FIG. 6, a plurality of fan-shaped units 8a-1, 8a-2, 8a-3, etc., constituting the magnetic shield 8a are prepared, and then the units are joined so as to be connected in the circumferential direction.

Each unit is formed by laminating a plurality of grain-oriented electromagnetic steel sheets. The plurality of grain-oriented electromagnetic steel sheets may be cut into a fan shape so that the easy magnetization direction is oriented in the circumferential direction when the grain-oriented electromagnetic steel sheets are joined. Then, the units are joined so as to be connected in the circumferential direction.

With this configuration, the magnetic shield 8a on the radially inner side, on which a stronger magnetic field is incident, has a small magnetic resistance in the circumferential direction, and thus a part of the magnetic fluxes is changed in direction to be directed in the circumferential direction rather than in the radially outer direction, and the magnetic fluxes directed in the radially outer direction are reduced. On the other hand, the magnetic shield 8b on the radially outer side has a large magnetic resistance in the circumferential direction; however, since the magnetic field incident thereon is weak, the shielding effect required for the magnetic shield on the radially outer side alone may be low. In general, a material having a large magnetic resistance is more easily obtainable than a material having a small magnetic resistance, and thus the material cost at the time of manufacturing can be suppressed.

In order to reduce the magnetic resistance in the circumferential direction of the magnetic shield 8a on the radially inner side, for example, the space factor in the axial direction of the magnetic shield 8a on the radially inner side may be set to be higher than the space factor in the axial direction of the magnetic shield 8b on the radially outer side. In this case, a material having a larger plate thickness than the magnetic shield 8b on the radially outer side may be used for the magnetic shield 8a on the radially inner side. For example, an electromagnetic steel sheet having a 0.5 mm thickness may be used for the magnetic shield 8a on the radially inner side, and an electromagnetic steel sheet having a 0.35 mm thickness may be used for the magnetic shield 8b on the radially outer side.

With this configuration, the space factor of the magnetic portion of the magnetic shield 8a on the radially inner side on which a stronger magnetic field is incident is increased, and the magnetic resistance in the axial direction can be reduced. Therefore, a higher shielding effect can be obtained as a whole.

In the description so far, the method of making the magnetic resistances in the circumferential direction of the magnetic shields 8a and 8b different has been described, but as another method, the iron losses of the magnetic shields 8a and 8b may be made different as described below.

### (Iron Losses of Magnetic Shields 8a and 8b)

A material having a smaller iron loss than the magnetic shield 8b on the radially outer side may be used for the magnetic shield 8a on the radially inner side. In this case, a material having a smaller thickness than the magnetic shield 8b on the radially outer side may be used for the magnetic shield 8a on the radially inner side. Further, for example, low-loss electromagnetic steel sheets of a higher grade than the magnetic shield 8b on the radially outer side may be used for the magnetic shield 8a on the radially inner side; that is, an electromagnetic steel sheet of JIS standard 50A250 may be used for the magnetic shield 8a on the radially inner side, and an electromagnetic steel sheet of JIS standard 50A470 may be used for the magnetic shield 8b on the radially outer side.

With this configuration, it is possible to suppress the occurrence of an iron loss in the magnetic portion of the magnetic shield 8a on the radially inner side where a stronger magnetic field is incident, and to suppress a temperature rise in the magnetic shield and a decrease in the performance of the rotating electrical machine.

The method of using a material thinner than the magnetic shield 8b on the radially outer side for the magnetic shield 8a on the radially inner side is opposite that of using a material thicker than the magnetic shield 8b on the radially outer side for the magnetic shield 8a on the radially inner side; which method is selected may be determined according to the intended purpose and use conditions of the rotating electrical machine. For example, the determination may be made according to whether to prioritize obtaining a higher shielding effect by reducing the magnetic resistance of the magnetic shield 8a on the radially inner side, or to prioritize suppressing a temperature rise in the magnetic shield and a decrease in the performance of the rotating electrical machine after obtaining a shielding effect of a certain level.

As described above, according to the present embodiment, the cylindrical magnetic shields are made of magnetic bodies formed of a plurality of magnetic shields spaced apart from one another in the radial direction, and thus it is possible to reduce the leakage magnetic field if a magnetic body having the same volume is used. That is, when the leakage magnetic field is set to the same level, the volume of the magnetic body can be reduced.

As described in detail above, according to the embodiment, it is possible to provide a rotating electrical machine capable of reducing the volume or weight of the shield structure.

While certain embodiments have been described, these embodiments have been presented by way of example only, and are not intended to limit the scope of the inventions. The novel embodiments described herein can be implemented in a variety of other forms; furthermore, various omissions, substitutions, and changes can be made without departing from the spirit of the invention. The accompanying claims and their equivalents are intended to cover such forms or modifications as would fall within the scope of the inventions.

## Claims

1. A rotating electrical machine comprising:
a rotor (1) having a field unit (3) configured to generate a magnetic field; and
a stator (5) provided on a radially outer side of the rotor (1) and including a stator coil (6) configured to generate the magnetic field interacting with a magnetic field generated by the field unit (3),
the stator (5) including magnetic shields (8) provided on a radially outer side of the stator coil (6) and composed of a plurality of cylindrical magnetic bodies disposed so as to be spaced apart from one another in a radial direction.

2. The rotating electrical machine according to claim 1, wherein a length (L1) in an axial direction of a first magnetic shield (8a) of the magnetic shields (8) that is disposed on a radially inner side is shorter than a length (L2) in the axial direction of a second magnetic shield (8b) that is disposed on a radially outer side of the first magnetic shield (8a).

3. The rotating electrical machine according to claim 2, wherein:
the length (L1) of the first magnetic shield (8a) in the axial direction is shorter than a length of a line in the axial direction connecting axial center positions of two coil end portions extending from both sides of a coil portion extending linearly in the axial direction of the stator coil (6), or shorter than a length of a line in the axial direction connecting axial center positions of two coil portions extending in a rotational direction of the field unit (3), and
the length (L2) of the second magnetic shield (8b) in the axial direction is longer than a length (Ls) of the stator coil (6) in the axial direction or a length (Lr) of the field unit (3) in the axial direction.

4. The rotating electrical machine according to any one of claims 1 to 3, wherein a magnetic resistance in a circumferential direction of the first magnetic shield (8a) of the magnetic shields (8) that is disposed on a radially inner side is smaller than a magnetic resistance in a circumferential direction of the second magnetic shield (8b) that is disposed on a radially outer side of the first magnetic shield (8a).

5. The rotating electrical machine according to claim 4, wherein a magnetic permeability in the circumferential direction of a material of the first magnetic shield (8a) is higher than a magnetic permeability in the circumferential direction of a material of the second magnetic shield (8b).

6. The rotating electrical machine according to claim 4 or 5, wherein a grain-oriented electromagnetic steel sheet is used for the first magnetic shield (8a), and a non-grain-oriented electromagnetic steel sheet is used for the second magnetic shield (8b).

7. The rotating electrical machine according to claim 4, wherein a space factor of the first magnetic shield (8a) in the axial direction is higher than a space factor of the second magnetic shield (8b) in the axial direction.

8. The rotating electrical machine according to claim 7, wherein a material having a plate thickness larger than that of the second magnetic shield (8b) is used for the first magnetic shield (8a).

9. The rotating electrical machine according to any one of claims 1 to 3, wherein a material having a smaller iron loss per unit area than the second magnetic shield (8b) disposed on a radially outer side of the first magnetic shield (8a) is used for the first magnetic shield (8a) of the magnetic shields (8) that is disposed on a radially inner side.

10. The rotating electrical machine according to claim 9, wherein a material having a plate thickness smaller than that of the second magnetic shield (8b) is used for the first magnetic shield (8a).

## Amended claims

### Amended claims under Art. 19.1 PCT

1. (Amended) A rotating electrical machine comprising:
a rotor (1) having a field unit (3) configured to generate a magnetic field;
a stator (5) provided on a radially outer side of the rotor (1) and having a stator coil (6) configured to generate the magnetic field interacting with a magnetic field generated by the field unit (3),
the stator (5) including magnetic shields (8) provided on a radially outer side of the stator coil (6) and composed of a plurality of cylindrical magnetic bodies disposed so as to be spaced apart from one another,
wherein a length (L1) in an axial direction of a first magnetic shield (8a) of the magnetic shields (8) that is disposed on a radially inner side is shorter than a length (L2) in an axial direction of a second magnetic shield (8b) that is disposed on a radially outer side of the first magnetic shield (8a).

2. (Canceled)

3. (Amended) The rotating electrical machine according to claim 1, wherein the length (L1) of the first magnetic shield (8a) in the axial direction is shorter than a length of a line in the axial direction connecting axial center positions of two coil end portions extending from both sides of a coil portion of a linear portion extending linearly in the axial direction of the stator coil (6), or shorter than a length of a line in the axial direction connecting axial center positions of two coil portions extending in a rotational direction of the field unit (3), and
the length (L2) of the second magnetic shield (8b) in the axial direction is longer than a length (Ls) of the stator coil (6) in the axial direction or a length (Lr) of the field unit (3) in the axial direction.

4. (Amended) The rotating electrical machine according to claim 1 or 3, wherein a magnetic resistance in a circumferential direction of the first magnetic shield (8a) of the magnetic shields (8) that is disposed on a radially inner side is smaller than a magnetic resistance in a circumferential direction of the second magnetic shield (8b) that is disposed on a radially outer side of the first magnetic shield (8a).

5. The rotating electrical machine according to claim 4, wherein a magnetic permeability in the circumferential direction of a material of the first magnetic shield (8a) is higher than a magnetic permeability in the circumferential direction of a material of the second magnetic shield (8b).

6. The rotating electrical machine according to claim 4 or 5, wherein a grain-oriented electromagnetic steel sheet is used for the first magnetic shield (8a), and a non-grain-oriented electromagnetic steel sheet is used for the second magnetic shield (8b).

7. The rotating electrical machine according to claim 4, wherein a space factor of the first magnetic shield (8a) in the axial direction is higher than a space factor of the second magnetic shield (8b) in the axial direction.

8. The rotating electrical machine according to claim 7, wherein a material having a plate thickness larger than that of the second magnetic shield (8b) is used for the first magnetic shield (8a).

9. (Amended) The rotating electrical machine according to claim 1 or 3, wherein the first magnetic shield (8a) of the magnetic shields (8) that is disposed on a radially inner side is made of a material having a smaller iron loss per unit area than the second magnetic shield (8b) disposed on a radially outer side of the first magnetic shield (8a).

10. The rotating electrical machine according to claim 9, wherein a material having a plate thickness smaller than that of the second magnetic shield (8b) is used for the first magnetic shield (8a).
